# EUROPÄISCHE PATENTSCHRIFT

(11) **EP 3 574 223 B1**
(45) Veröffentlichungstag und Bekanntmachung des Hinweises auf die Patenterteilung: **22.09.2021**
(21) Anmeldenummer: 18730272.4
(22) Anmeldetag: 29.05.2018
(51) Int. Cl.: F16C 17/08, F16C 17/24, F16C 17/26, F16C 27/02, F16C 33/10, F03D 80/70, F16C 17/02, F16H 57/02

(54) **LAGERUNG EINER ZWISCHENWELLE INSBESONDERE EINES WINDGETRIEBES**
BEARING OF AN INTERMEDIATE SHAFT, IN PARTICULAR IN A WIND GEAR
PALIERS D'UN ARBRE INTERMÉDIAIRE, NOTAMMENT DANS LA TRANSMISSION D'UNE ÉOLIENNE

(30) Priorität: 31.05.2017 DE 102017209217
(43) Veröffentlichungstag der Anmeldung: 04.12.2019
(73) Patentinhaber: Flender GmbH, 46395 Bocholt (DE)
(72) Erfinder: MEYER, Thomas, 52223 Stolberg (DE)
(74) Vertreter: Michalski Hüttermann & Partner Patentanwälte mbB
(86) Internationale Anmeldenummer: PCT/EP2018/064052
(87) Internationale Veröffentlichungsnummer: WO 2018/219939

(56) Entgegenhaltungen:
- WO-A2-2009/052824
- DE-U1- 20 218 170
- JP-A- 2008 106 894
- JP-U- S57 155 191

## Beschreibung

Windgetriebe mit einer Lagerung einer Zwischenwelle.

Die Erfindung betrifft ein Windgetriebe mit einer Lagerung einer Zwischenwelle, also eines Getriebes für eine Windkraftanlage und ein Betriebsverfahren.

Getriebe können in verschiedenen Anwendungen eingesetzt werden. So kommen Getriebe beispielsweise bei Schiffsantrieben, aber auch in Windkraftanlagen oder in anderen industriellen Einsatzgebieten zum Einsatz. Das Getriebe ist beispielsweise ein Stirnradgetriebe, welches insbesondere eine Schrägverzahnung aufweist. Ein Getriebe weist insbesondere eine Zwischenwelle auf, wobei diese Welle z.B. ein zweistufiges Stirnradteil betrifft. Auch Planetengetriebe können beispielsweise bei Windkraftanlagen eingesetzt werden.

Bei Windkraftanlagen, wie auch bei Antrieben in Fahrzeugen (z.B. Schiffe, Loks, LKWs, etc.), ist oft der Bauraum beschränkt.

WO 2009/052824 A2 offenbart ein Windgetriebe gemäß dem Oberbegriff des Anspruchs 1.

JP S57 155191 U, JP 2008 106894 A und DE 202 18 170 U1 offenbaren andere Arten von Lagern.

Eine Aufgabe der vorliegenden Erfindung ist es eine kompakte Lagerung bei einem Getriebe anzugeben.

Eine Lösung der Aufgabe ergibt sich bei einem Windgetriebe mit einer Lagerung gemäß der Ansprüche 1 bis 15 bzw. bei einem Verfahren nach Anspruch 16 oder 17.

Eine Lagerung einer Zwischenwelle eines Getriebes weist die Zwischenwelle auf, wobei die Zwischenwelle ein erstes Wellenende und ein zweites Wellenende aufweist, wobei zwischen dem ersten Wellenende und dem zweiten Wellenende zumindest ein Verzahnungselement ist. Das Verzahnungselement ist beispielsweise ein auf der Zwischenwelle befindliches Zahnrad oder ein in die Welle integrierter Zahnkranz, etc. Bei der Lagerung ist beim ersten Wellenende ein erstes Radiallager und beim zweiten Wellenende ein zweites Radiallager, wobei beim ersten Wellenende auch ein erstes Axiallager ist und beim zweiten Wellenende auch ein zweites Axiallager ist. Beim Wellenende meint im Bereich des Endes der Welle, wobei sich dieser Endbereich axial mit der Welle schneiden kann, aber auch über die axiale Ausdehnung der Welle hinausreichen kann. Das Radiallager nimmt zumindest überwiegend Kräfte auf, welche radial verlaufen. Das Axiallager nimmt zumindest überwiegend Kräfte auf welche axial verlaufen. Durch das Axiallager bzw. durch eine Vielzahl von Axiallager kann eine Welle daran gehindert werden axiale Bewegungen in unzulässiger Weise auszuführen. Sowohl im industriellen Einsatz von Lagern (Industrielager), wie auch bei Windgetrieben (z.B. einem Stirnradgetriebe mit Schrägverzahnung) können axiale Kräfte auftreten, welche durch ein Axiallager aufzufangen sind. Lager, wie Axiallager und/oder Radiallager sind beispielsweise als Gleitlager, Kugellager, Tonnenlager, etc. ausführbar. Der erforderliche Bauraum für eine Festlagereinheit (die Festlagereinheit weist insbesondere ein Radiallager und zwei Axialgleitlager auf) mit ihrer Kombination aus z.B. Axialgleitlagern mit einem Radialgleitlager ist anordnungsbedingt sehr groß, da der Innendurchmesser der Axiallager größer ist als der Radiallagerdurchmesser. Dies führt dazu, dass die Radiallager insbesondere mit kleiner Bauhöhe nicht zu vorteilhaften Bauraumvorteilen führen. Dies führt dazu, dass entsprechende Zwischenkörper zur Aufnahme der Lagerbauteile Verwendung finden, die im Gehäuse-Lagerstuhl fixiert werden. Wird nun die Festlagereinheit aufgelöst, ist es möglich ohne Zwischenkörper auszukommen und den minimalen Bauraum, den die Radialgleitlager nur benötigen, für die Gehäusestruktur und dessen Optimierung, zu nutzen. Die Optimierung der Anbindung der Radiallager gelingt, wenn diese direkt in der Gehäusestruktur aufgenommen werden. Ist nun keine Festlagereinheit vorhanden, diese also aufgelöst, kann die Funktion der beiden Axialgleitlager der Festlagereinheit in die Position der jeweiligen Wellenenden (Wellenspiegel) verlegt werden. Die Welle weist also zwei Wellenenden auf, in deren Bereich nun Axiallager, insbesondere Axialgleitlager positioniert sind. In dieser Position besteht die Möglichkeit, Bauteile des Getriebes wie z.B. einen Deckel und/oder eine Gehäusestruktur (insbesondere eine innere Gehäusestruktur) für die Adaption der Axiallager zu nutzen. Die Wellenenden stehen dafür auch zur Verfügung. Durch einen Bauraum für die Axiallager (insbesondere Axialgleitlager) im Bereich der Wellenenden ist eine kompakte Bauweise einer Lagerung und damit z.B. auch eines Getriebes möglich. Die Welle ist dabei insbesondere eine Zwischenwelle eines Getriebes. So geht die Axiallagerung nun nicht in eine Festlagereinheit in Verbindung mit einem Radiallager ein, sondern ist hiervon losgelöst an den Wellenenden positioniert. Damit können einige Vorteile erzielt werden:
- geringer Bauraum für die Axiallagerung;
- weniger Bauteile;
- Kostenreduzierung durch geringeren Materialeinsatz und/oder
- Optimierung der Gehäusestruktur bei geringerem Materialeinsatz.

In einer Ausgestaltung der Lagerung ist das erste Radiallager ein Loslager. Das Loslager ist insbesondere ein Gleitlager. Durch dieses ist die damit gelagerte Welle drehbar gelagert.

In einer Ausgestaltung der Lagerung ist das zweite Radiallager ein Loslager. Das Loslager ist insbesondere ein Gleitlager. Durch dieses ist die damit gelagerte Welle drehbar gelagert.

In einer Ausgestaltung der Lagerung ist das erste Axiallager in einem Gehäuse des Getriebes fixiert. Das Innere des Gehäuses ist dabei insbesondere so ausgeformt, dass eine Aufnahme und Fixierung platzsparend erfolgen kann.

In einer Ausgestaltung der Lagerung ist das zweite Axiallager durch einen Deckel des Gehäuses des Getriebes fixiert. Dadurch kann ein geringer Bauraum realisiert werden und/oder der Austausch des zweiten Axiallagers erleichtert werden. Neben dem Austausch des zweiten Axiallagers über die Öffnung, welche der Deckel verschließt, können auch die beiden Radiallager, die Welle und/oder das erste Axiallager ausgetauscht werden.

In einer Ausgestaltung der Lagerung ist das erste Axiallager mit einem ersten Ölsumpf verbunden. Das Öl im Ölsumpf dient der Schmierung des Lagers.

In einer Ausgestaltung der Lagerung ist das zweite Axiallager mit einem zweiten Ölsumpf verbunden. Das Öl im Ölsumpf dient der Schmierung des Lagers.

In einer Ausgestaltung der Lagerung ist der erste Ölsumpf mit dem zweiten Ölsumpf derart verbunden, dass Öl vom ersten Ölsumpf zum zweiten Ölsumpf und umgekehrt gelangen kann. So kann beispielsweise Öl aus dem ersten Ölsumpf verdrängt werden und in den zweiten Ölsumpf gelangen und umgekehrt. Dies kann beispielsweise bei Lastwechseln, beim Nothalt oder im Reversierbetrieb eines Getriebes vorkommen.

In einer Ausgestaltung der Lagerung weist dieses ein Axiallager auf, welches ein Reversier-Axiallager ist, wobei dieses als Verdrängungsdrucklager ausgelegt ist. So ist beispielsweise das erste Axiallaer ein Reversier-Axiallager. Ein zum Axiallager zugehöriger Ölsumpf kann im Bereich des Wellenspiegels platziert sein. Der so ausgebildete Ölsumpfraum wird insbesondere eingegrenzt durch den Gehäusedeckel, das Wellenende mit oder ohne Anlaufscheibe und/oder eine Gehäusebohrung. Bei der Ölsumpfschmierung entfällt die unmittelbare Öldruckzuführung für das Axiallager am Wellenende. Ein auf 11 Uhr bzw. 1 Uhr liegender Ölablauf begrenzt beispielsweise den Ölstand des lokalen Ölsumpfes. Der Ölsumpf hat den Vorteil gegenüber der Druckölzuführung, dass der Spalt immer einen 100% Ölfüllungsgrad aufweisen kann. Da die Reversierlast einen zeitlich begrenzten, dynamisch schwingenden Charakter hat, besteht so die Möglichkeit, das Lager nicht stationär auszulegen, sondern dynamisch als Quetschöldämpfer. Ein Lastwechsel erfolgt beispielsweise im Mittel etwa alle 0,37 sec für einen Not-Stopp einer Turbine.

Durch die beschriebene Lagerung können folgende Vorteile bzw. Schmierlösungen erzielt werden:
- eine Sumpfschmierung für die Axiallager;
- Auslegung des Reversier-Axiallager als Quetschöldämpfer (Verdrängungsdruckaufbau) und/oder
- Verzicht auf eine Druckschmierung beim Reversierlager.

In einer Ausgestaltung der Lagerung ist die radiale Ausdehnung des ersten Radiallagers kleiner, als die radiale Ausdehnung des ersten Axiallagers. So kann eine kompakte Bauform erzielt werden.

In einer Ausgestaltung der Lagerung ist die radiale Ausdehnung des zweiten Radiallagers kleiner, als die radiale Ausdehnung des zweiten Axiallagers. Auch so kann eine kompakte Bauform erzielt werden.

In einer Ausgestaltung der Lagerung ist das zweite Axiallager für eine höhere Betriebsstundenzahl, insbesondere die doppelte Betriebsstundenzahl, ausgelegt als das erste Axiallager. Das zweite Axiallager ist nach dem Öffnen des Gehäusedeckels leichter zugänglich als das erste Axiallager, da das zweite Axiallager unmittelbar hinter dem Gehäusedeckel platziert ist. Der Austausch eines leichter zugänglichen Lagers reduziert die Ausfallzeit des Lagers, wenn dieses gewartet wird.

In einer Ausgestaltung der Lagerung grenzt das erste Axiallager an einem ersten Wellenspiegel an und/oder das zweite Axiallager grenzt an einem zweiten Wellenspiegel an. Grenzen die Axiallager unmittelbar an, so trägt dies zu einer kompakten Bauweise bei.

In einer Ausgestaltung der Lagerung ist zumindest ein Wellenspiegel mittels einer Anlaufscheibe an zumindest eines der Axiallager adaptiert. So können Größenunterschiede von Axiallager und Wellenspiegel ausgeglichen werden. Sollten also z.B. die Wellenenden zu klein sein, besteht die Möglichkeit, Anlaufscheiben an den Wellenenden zu adaptieren, die dann als Gegenlauffläche fungieren. Diese Vorgehensweise kann auch teilweise umgesetzt werden, indem beispielsweise an der Zwischenwelle eines Getriebes weiterhin das Rad als Anlauffläche für das Axiallager, welches dann an der Gehäuseinnenwand adaptiert ist, verwendet wird.

In einer Ausgestaltung der Lagerung ist zumindest eines der Axiallager ein Reversier-Axiallager, wobei dieses insbesondere als Verdrängungsdrucklager ausgebildet ist. Dies reduziert die Komplexität der Schmierung.

Ein Windgetriebe weist vorteilhaft eine Lagerung nach zumindest einer der beschriebenen Ausgestaltungen auf. Die Ausgestaltungen sind untereinander kombinierbar. So kann ein platzsparendes Getriebe mit einer derartigen Lagerung realisiert werden, welches beispielsweise den engen Platzverhältnissen in einer Gondel einer Windkraftanlage zu statte kommt.

In einer Ausgestaltung des Windgetriebes weist dieses eine Zwischenwelle auf, wobei dies eine Zwischenwelle eines zweistufigen Stirnradteils des Windgetriebes ist.

In einer Ausgestaltung des Windgetriebes weist ein Reversierlager einen Schmierspalt von größer 0,5 mm auf. Befindet sich in diesem Schmierspalt Öl kann dieses bei Lastwechsel aus dem Spalt teilweise verdrängt werden, was dämpfend wirkt.

Bei einem Verfahren zum Betrieb eines Windgetriebes wird eine Quetschzeit des Reversierlagers gewählt, welche einer Frequenz eines Lastwechsels entspricht. Hierfür ist insbesondere das Reversier-Axiallager als Verdrängungsdrucklager ausgelegt. Zudem sei im Bereich zumindest einer der Wellenspiegel ein Ölsumpf vorgesehen. Der Ölsumpfraum wird beispielsweise eingegrenzt durch den Gehäusedeckel, ein Wellenende mit Anlaufscheibe und/oder eine Gehäusebohrung. Bei der Ölsumpfschmierung entfällt die unmittelbare Öldruckzuführung für das Axiallager am Wellenende. Der Ölsumpf hat den Vorteil gegenüber der Druckölzuführung, dass der Spalt vorzugsweise immer einen 100% Ölfüllungsgrad aufweist. Da die Reversierlast einen zeitlich begrenzten, dynamisch schwingenden Charakter hat, besteht nun die Möglichkeit, das Lager nicht stationär auszulegen, sondern dynamisch als Quetschöldämpfer. Das Reversierlager hat im Normalbetrieb aufgrund des gesamten Axialspiels einen großen Spalt (weil es nicht belastet ist) und demnach beim Auftreten einer Reversierlast aus dem Normallastzustand eine großen Ausgangsschmierspalt in der Größenordnung von z.B. größer 0,5mm.

In einer Ausgestaltung des Verfahrens wird die Quetschzeit größer einer Stoßzeit gewählt. Dies bedeutet, dass der Schmierspalt groß genug zu sein hat, damit nicht während eines Stoßes der Spalt auf 0mm reduziert ist. Dabei wird die Zeit, die das Lager benötigt um das Axialspiel zu überwinden Quetschzeit genannt. Die Quetschzeit des Reversieraxiallagers liegt demnach in der Größenordnung der Frequenz des Lastwechsels. Die Amplitudenzeit vom Auftreten des Reversierstoßes bis zum nächsten Nulldurchgang beträgt dann beispielsweise 0,37 sec (Stoßdauer). Ist die Quetschzeit des Reversierlagers unter Berücksichtigung der Massenträgheiten und Reibungswiderständen größer als die Stoßdauer kommt es nicht zu einem Kontakt der Gleitflächen.

Die Erfindung wird nachfolgend auf der Basis von Ausführungsbeispielen unter Bezugnahme auf die beiliegende Zeichnungen exemplarisch weiter erläutert, wobei gleichartige Elemente die gleichen Bezugszeichen aufweisen. Dabei zeigt:
FIG 1 eine erste Lagerung mit einer Zwischenwelle, nicht Teil der beanspruchten Erfindung;
FIG 2 eine zweite Lagerung mit einer Zwischenwelle und
FIG 3 einen Momentenverlauf bei einem Getriebe einer Windkraftanlage in Abhängigkeit von der Drehzahl.

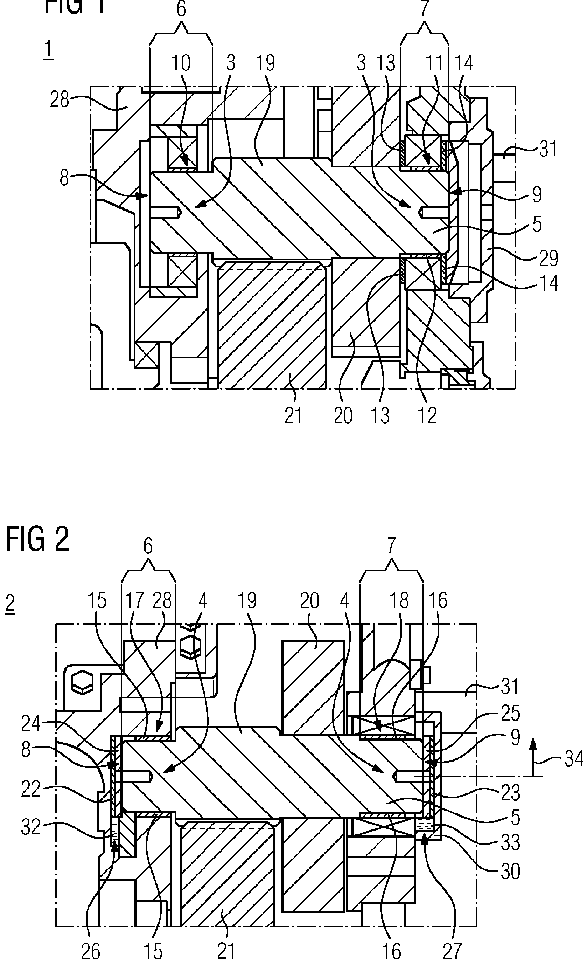

Die Darstellung nach FIG 1 zeigt in einem Ausschnitt ein erstes Windgetriebe 1, welches eine Lagerung 3 und ein Getriebegehäuse 28 aufweist. Die Lagerung 3 weist ein Loslager 10 und eine Festlagereinheit mit Stahladapter 11 aus. Das Loslager 10 ist beispielsweise ein radiales Gleitlager. Die Festlagereinheit 11 weist einen Stahladapter, eine linksseitige axiale Lagerung 13 und eine rechtsseitige axiale Lagerung 14, sowie eine radiale Lagerung 12 auf. Mittels der Lagerung 3 ist eine Zwischenwelle 5 des Getriebes 1 gelagert. Die Zwischenwelle 5 weist ein erstes Wellenende 6, also einen ersten Wellenendenbereich 6 auf. Am ersten Wellenende 6 befindet sich ein erster Wellenspielgel 8. Im Bereich des ersten Wellenendes 6 befindet sich das Loslager 10. Am zweiten Wellenende 7 befindet sich ein zweiter Wellenspielgel 9. Im Bereich des zweiten Wellenendes 7 befindet sich die Festlagereinheit 11. Diese Festlagereinheit ist über einen Getriebegehäusedeckel 29 zugänglich. Zwischen dem ersten Wellenende 6 und dem zweiten Wellenende 7 befinden sich Verzahnungselemente. Ein erstes Verzahnungselement ist eine in die Zwischenwelle 5 integrierte Verzahnung 19. Ein zweites Verzahnungselement ist ein erstes Zahnrad 20 auf der Zwischenwelle 5. In die Verzahnung 19 greift ein zweites Zahnrad 21 ein. Das erste Zahnrad 20 ist zur Übertragung von Kräften auf eine Anschlusswelle 31 vorgesehen.

Nach der FIG 1 ist also eine Zwischenwelle 5 eines zweistufigen Stirnradteils eines Windgetriebes 1, mit Stahlkörpern zur Aufnahme der großen Axialgleitlager 13 und 14 in der Festlagereinheit, rechts gezeigt. Die Festlagereinheit kann dahingehend optimiert werden, dass vorhandene Getriebebauteile als Gegenlauffläche Verwendung finden. So kann an der Zwischenwelle 5 das Zahnrad als Gegenlauffläche verwendet werden. Dies ist jedoch nicht bei allen Wellen im Stirnradgetriebe möglich, da die Verzahnungen dies von ihrer Größe nicht immer ermöglichen (Grund: zu kleine Ritzelverzahnungen).

Der erforderliche Bauraum von Axialgleitlagern in Kombination mit einem Radialgleitlager (Festlagereinheit 11 mit einem Radiallager und zwei Axialgleitlager) ist anordnungsbedingt sehr groß, da der Innendurchmesser der Axiallager größer ist als der Radiallagerdurchmesser. Dies führt dazu, dass die Radiallager mit kleiner Bauhöhe nicht zu den gewünschten Bauraumvorteilen führen. Dies führt dazu, dass entsprechende Zwischenkörper zur Aufnahme der Lagerbauteile Verwendung finden müssen, die im Gehäuse-Lagerstuhl fixiert werden müssen. Ziel ist es, ohne Zwischenkörper auszukommen und den minimalen Bauraum, den die Radialgleitlager nur benötigen, für die Gehäusestruktur und dessen Optimierung, zu nutzen. Die Optimierung der Anbindung der Radiallager gelingt, wenn diese direkt in der Gehäusestruktur aufgenommen werden können. Auch kann die Festlagereinheit dahingehend verbessert werden, dass vorhandene Getriebebauteile als Gegenlauffläche Verwendung finden. So kann an der Zwischenwelle 5 das Zahnrad 20 als Gegenlauffläche verwendet werden.

Die Darstellung nach FIG 2 zeigt im Ausschnitt ein weiteres Windgetriebe 2, wobei das Prinzip einer Axialgleitlagerung an den Wellenenden mit Ölsumpf dargestellt ist. Gezeigt ist eine Zwischenwelle 5 die am ersten Wellenende 6 einen ersten Lagerstuhl 17 für ein erstes Radiallager 15 aufweist. Am zweiten Wellenende 7 ist ein zweiter Lagerstuhl 18 für ein zweites Radiallager 16. Beim ersten Wellenspiegel 8 befindet sich ein erstes Axiallager 22 mit einer ersten Anlaufscheibe 24. In einem ersten Ölsumpfraum 26 befindet sich ein erster Ölsumpf 32 zur Schmierung des ersten Axiallagers 22. Beim zweiten Wellenspiegel 9 befindet sich ein zweites Axiallager 23 mit einer radialen Ausdehnung 34. Zwischen dem zweiten Axiallager 23 und dem zweiten Wellenspiegel 9 befindet sich eine zweite Anlaufscheibe 25. In einem zweiten Ölsumpfraum 27 befindet sich ein zweiter Ölsumpf 33 zur Schmierung des zweiten Axiallagers 23. Das zweite Axiallager 23 ist durch den Getriebegehäusedeckel 30 fixiert. Die Lagerung 4 nach FIG 2 weist beim bzw. am erster Wellenende 6 das erste Radiallager 15 und das erste Axiallager 22 auf. Beim bzw. am zweiten Wellenende 7 weist die Lagerung 4 das zweite Radiallager 16 und das zweite Axiallager 23 auf.

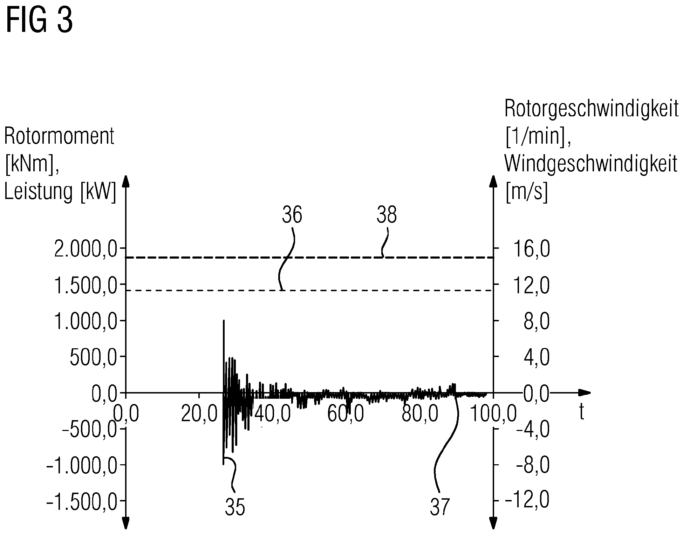

Die Darstellung nach FIG 3 zeigt einen Momentenverlauf bei einem Getriebe einer Windkraftanlage in Abhängigkeit von der Drehzahl insbesondere einen zeitlichen Verlauf von Drehzahl und Drehmoment eines Notstops einer Windenergieanlage. Gezeigt ist, wie bei einem Notstop der Momentenwert (Torque) 35 um den Nullwert schwankt. Diese Schwankung beansprucht die Lagerung eines eingesetzten Getriebes, wobei insbesondere die Dicke eines Schmierspaltes und das darin befindliche Schmiermittel so Dick auszulegen ist, dass durch die Schwankung bzw. Schwingung um den Nullwert der Schmierspalt nicht verschwindet, so dass stets eine Schmierung durch das Schmiermittel erfolgen kann. Neben dem Momentenistwert 35 ist auch der Drehzahlistwert (Rot. Speed) 37 gezeigt. Darüber hinaus ist der nominelle Drehzahlwert (Rot. Speed (Nom)) 38 und der nominelle Momentenwert (Torque (Nom)) 36 gezeigt.

## Patentansprüche

1. Windgetriebe (2) mit einer Lagerung (4) einer Zwischenwelle (5), wobei die Zwischenwelle (5) ein erstes Wellenende (6) und ein zweites Wellenende (7) aufweist, wobei zwischen dem ersten Wellenende (6) und dem zweiten Wellenende (7) ein Verzahnungselement (19,20,21) ist, **dadurch gekennzeichnet dass**, beim ersten Wellenende (6) ein erstes Radiallager (15) ist, beim zweiten Wellenende (7) ein zweites Radiallager (16) ist, beim ersten Wellenende (6) ein erstes Axiallager (22) ist und beim zweiten Wellenende (7) ein zweites Axiallager (23) ist.

2. Windgetriebe (2) nach Anspruch 1, wobei das erste Radiallager (15) ein Loslager ist.

3. Windgetriebe (2) nach Anspruch 1 oder 2, wobei das zweite Radiallager (16) ein Loslager ist.

4. Windgetriebe (2) nach einem der Ansprüche 1 bis 3, wobei das erste Axiallager (22) in einem Gehäuse (28) des Getriebes (2) fixiert ist.

5. Windgetriebe (2) nach einem der Ansprüche 1 bis 4, wobei das zweite Axiallager (23) durch einen Deckel (30) des Gehäuses (28) des Getriebes (2) fixiert ist.

6. Windgetriebe (2) nach einem der Ansprüche 1 bis 5, wobei das erste Axiallager (22) mit einem ersten Ölsumpf (32) verbunden ist.

7. Windgetriebe (2) nach einem der Ansprüche 1 bis 6, wobei das zweite Axiallager (23) mit einem zweiten Ölsumpf (33) verbunden ist.

8. Windgetriebe (2) nach einem der Ansprüche 1 bis 7, wobei die radiale Ausdehnung (34) des ersten Radiallagers (15) kleiner ist, als die radiale Ausdehnung des ersten Axiallagers (22).

9. Windgetriebe (2) nach einem der Ansprüche 1 bis 8, wobei die radiale Ausdehnung (34) des zweiten Radiallagers (16) kleiner ist, als die radiale Ausdehnung des zweiten Axiallagers (23).

10. Windgetriebe (2) nach einem der Ansprüche 1 bis 9, wobei das zweite Axiallager (23) für eine höhere Betriebsstundenzahl, insbesondere die doppelte Betriebsstundenzahl, ausgelegt ist, als das erste Axiallager (22).

11. Windgetriebe (2) nach einem der Ansprüche 1 bis 10, wobei das erste Axiallager (22) an einem ersten Wellenspiegel (8) angrenzt und/oder das zweite Axiallager (23) an einem zweiten Wellenspiegel (9) angrenzt.

12. Windgetriebe (2) nach einem der Ansprüche 1 bis 11, wobei zumindest ein Wellenspiegel (8,9) mittels einer Anlaufscheibe (24,25) an zumindest eines der Axiallager (22,23) adaptiert ist.

13. Windgetriebe (2) nach einem der Ansprüche 1 bis 12, wobei zumindest eines der Axiallager (22,23) ein Reversier-Axiallager ist und insbesondere als Verdrängungsdrucklager ausgebildet ist.

14. Windgetriebe (2) nach Anspruch 11, wobei die Zwischenwelle (5) eine Zwischenwelle (5) eines zweistufigen Stirnradteils des Windgetriebes (2) ist.

15. Windgetriebe (2) nach Anspruch 13, wobei das Reversierlager einen Schmierspalt von größer 0,5 mm aufweist.

16. Verfahren zum Betrieb eines Windgetriebes (2) nach einem der Ansprüche 13 oder 15, wobei eine Quetschzeit des Reversierlagers gewählt wird, welche einer Frequenz eines Lastwechsels entspricht.

17. Verfahren nach Anspruch 16, wobei die Quetschzeit größer einer Stoßzeit gewählt wird.

## Claims

1. Wind gearbox (2) with a mounting (4) of an intermediate shaft (5), wherein the intermediate shaft (5) has a first shaft end (6) and a second shaft end (7), wherein there is a toothing element (19, 20, 21) between the first shaft end (6) and the second shaft end (7), **characterized in that** there is a first radial bearing (15) at the first shaft end (6), there is a second radial bearing (16) at the second shaft end (7), there is a first axial bearing (22) at the first shaft end (6) and there is a second axial bearing (23) at the second shaft end (7).

2. Wind gearbox (2) according to Claim 1, wherein the first radial bearing (15) is a movable bearing.

3. Wind gearbox (2) according to Claim 1 or 2, wherein the second radial bearing (16) is a movable bearing.

4. Wind gearbox (2) according to one of Claims 1 to 3, wherein the first axial bearing (22) is fixed in a housing (28) of the gearbox (2).

5. Wind gearbox (2) according to one of Claims 1 to 4, wherein the second axial bearing (23) is fixed by a cover (30) of the housing (28) of the gearbox (2).

6. Wind gearbox (2) according to one of Claims 1 to 5, wherein the first axial bearing (22) is connected to a first oil sump (32).

7. Wind gearbox (2) according to one of Claims 1 to 6, wherein the second axial bearing (23) is connected to a second oil sump (33).

8. Wind gearbox (2) according to one of Claims 1 to 7, wherein the radial extent (34) of the first radial bearing (15) is smaller than the radial extent of the first axial bearing (22).

9. Wind gearbox (2) according to one of Claims 1 to 8, wherein the radial extent (34) of the second radial bearing (16) is smaller than the radial extent of the second axial bearing (23).

10. Wind gearbox (2) according to one of Claims 1 to 9, wherein the second axial bearing (23) is configured for a greater number of operating hours, in particular twice the number of operating hours, than the first axial bearing (22).

11. Wind gearbox (2) according to one of Claims 1 to 10, wherein the first axial bearing (22) is adjacent to the first shaft end face (8) and/or the second axial bearing (23) is adjacent to a second shaft end face (9) .

12. Wind gearbox (2) according to one of Claims 1 to 11, wherein at least one shaft end face (8, 9) is adapted to at least one of the axial bearings (22, 23) by means of a thrust washer (24, 25).

13. Wind gearbox (2) according to one of Claims 1 to 12, wherein at least one of the axial bearings (22, 23) is a reversing axial bearing and is in the form in particular of a displacement pressure bearing.

14. Wind gearbox (2) according to Claim 11, wherein the intermediate shaft (5) is an intermediate shaft (5) of a two-stage spur gear part of the wind gearbox (2) .

15. Wind gearbox (2) according to Claim 13, wherein the reversing bearing has a lubricating gap of greater than 0.5 mm.

16. Method for operating a wind gearbox (2) according to either of Claims 13 and 15, wherein a compression time of the reversing bearing that corresponds to a frequency of a load change is selected.

17. Method according to Claim 16, wherein the compression time is selected to be greater than an impact time.

## Revendications

1. Transmission éolienne (2) comprenant un palier (4) d'un arbre intermédiaire (5), l'arbre intermédiaire (5) comportant une première extrémité d'arbre (6) et une deuxième extrémité d'arbre (7), un élément formant denture (19, 20, 21) étant disposé entre la première extrémité d'arbre (6) et la deuxième extrémité d'arbre (7), **caractérisé en ce que**
un premier palier radial (15) est disposé à la première extrémité d'arbre (6),
un deuxième palier radial (16) est disposé à la deuxième extrémité d'arbre (7),
un premier palier axial (22) est disposé à la première extrémité d'arbre (6) et
un deuxième palier axial (23) est disposé à la deuxième extrémité d'arbre (7).

2. Transmission éolienne (2) selon la revendication 1, le premier palier radial (15) étant un palier libre.

3. Transmission éolienne (2) selon la revendication 1 ou 2, le deuxième palier radial (16) étant un palier libre.

4. Transmission éolienne (2) selon l'une des revendications 1 à 3, le premier palier axial (22) étant fixé dans un boîtier (28) de la transmission (2).

5. Transmission éolienne (2) selon l'une des revendications 1 à 4, le deuxième palier axial (23) étant fixé par un couvercle (30) du boîtier (28) de la transmission (2).

6. Transmission éolienne (2) selon l'une des revendications 1 à 5, le premier palier axial (22) étant relié à un premier carter d'huile (32).

7. Transmission éolienne (2) selon l'une des revendications 1 à 6, le deuxième palier axial (23) étant relié à un deuxième carter d'huile (33).

8. Transmission éolienne (2) selon l'une des revendications 1 à 7, l'extension radiale (34) du premier palier radial (15) étant inférieure à l'extension radiale du premier palier axial (22).

9. Transmission éolienne (2) selon l'une des revendications 1 à 8, l'extension radiale (34) du deuxième palier radial (16) étant inférieure à l'extension radiale du deuxième palier axial (23).

10. Transmission éolienne (2) selon l'une des revendications 1 à 9, le deuxième palier axial (23) étant conçu pour un nombre d'heures de fonctionnement plus élevé, notamment le double du nombre d'heures de fonctionnement, que le premier palier axial (22).

11. Transmission éolienne (2) selon l'une des revendications 1 à 10, le premier palier axial (22) étant adjacent à une première extrémité d'arbre (8) et/ou le deuxième palier axial (23) étant adjacent à une deuxième extrémité d'arbre (9).

12. Transmission éolienne (2) selon l'une des revendications 1 à 11, au moins un bout d'arbre (8, 9) étant adapté à au moins un des paliers axiaux (22, 23) au moyen d'une rondelle de butée (24, 25).

13. Transmission éolienne (2) selon l'une des revendications 1 à 12, l'un au moins des paliers axiaux (22, 23) étant un palier axial inverseur et étant notamment conçu comme un palier de butée de déplacement.

14. Transmission éolienne (2) selon la revendication 11, l'arbre intermédiaire (5) est un arbre intermédiaire (5) d'une partie formant pignon droit à deux étages de la transmission éolienne (2).

15. Transmission éolienne (2) selon la revendication 13, le palier d'inversion comportant un intervalle de lubrification de plus de 0,5 mm.

16. Procédé de fonctionnement d'une transmission éolienne (2) selon l'une des revendications 13 et 15, un temps d'écrasement du palier d'inversion étant choisi qui correspond à une fréquence d'un cycle d'effort.

17. Procédé selon la revendication 16, le temps d'écrasement étant choisi pour être supérieur à un temps de choc.
